# NEUE EUROPÄISCHE PATENTSCHRIFT

(11) **EP 1 937 498 B2**
(45) Veröffentlichungstag und Bekanntmachung des Hinweises auf die Entscheidung über den Einspruch: **02.11.2016**
(45) Hinweis auf die Patenterteilung: 25.03.2009
(21) Anmeldenummer: 06791901.9
(22) Anmeldetag: 07.09.2006
(51) Int. Cl.: B60G 3/24, B60G 3/20

(54) **RADAUFHÄNGUNG FÜR DIE ANGETRIEBENEN HINTERRÄDER EINES KRAFTFAHRZEUGS**
WHEEL SUSPENSION FOR THE DRIVEN REAR WHEELS OF A MOTOR VEHICLE
SUSPENSION POUR LES ROUES ARRIERE ENTRAINEES D'UN VEHICULE AUTOMOBILE

(30) Priorität: 19.10.2005 DE 102005049947
(43) Veröffentlichungstag der Anmeldung: 02.07.2008
(73) Patentinhaber: Bayerische Motoren Werke Aktiengesellschaft, 80809 München (DE)
(72) Erfinder: LISCHKA, Christof, 80807 München (DE); BURKART, Dieter, 82205 Gilching (DE); GRAF, Thomas, 80992 München (DE)
(74) Vertreter: Banzhaf, Felicita
(86) Internationale Anmeldenummer: PCT/EP2006/008723
(87) Internationale Veröffentlichungsnummer: WO 2007/045308

(56) Entgegenhaltungen:
- EP-A1- 0 288 654
- EP-A2- 0 849 103
- EP-A2- 0 873 891
- DE-A1- 3 331 282
- DE-A1- 10 207 654
- FR-A1- 2 799 156
- JP-A- 4 372 408
- US-A- 4 556 238
- US-A1- 2002 043 780
- US-A1- 2004 000 767
- US-B1- 6 755 429
- MATSCHINSKY W ET AL: "DIE INTEGRAL-HINTERACHSE FUER DAS COUPE BMW 850I" ATZ AUTOMOBILTECHNISCHE ZEITSCHRIFT, VIEWEG PUBLISHING, WIESBADEN, DE, Bd. 92, Nr. 10, 1. Oktober 1990 (1990-10-01), Seiten 554-557,560,56, XP000174824 ISSN: 0001-2785

## Beschreibung

Die Erfindung betrifft eine Radaufhängung für die über eine Abtriebswelle angetriebenen Hinterräder eines Kraftfahrzeugs mit einem das Rad lagernden Radträger, an dem ein verwindungssteif ausgebildeter Querlenker über ein erstes Lager direkt und über ein zweites Lager unter Zwischenschaltung eines im wesentlichen senkrecht zur Ebene dieses Querlenkers angeordneten sog. Integrallenkers indirekt mit dem Radträger verbunden ist und zwei weitere Querlenker angelenkt sind, wobei alle Querlenker mit ihrem dem Radträger abgewandten Ende direkt oder indirekt letztlich am Fahrzeug-Aufbau abgestützt sind und wobei sich die aufbauseitige Drehachse des verwindungssteifen Querlenkers mit der Verbindungslinie der radseitigen Lager dieses Querlenkers zumindest annähernd und in Draufsicht vor dem Rad schneiden, und wobei einer der weiteren Querlenker oberhalb des verwindungssteifen Querlenkers sowie zumindest annähernd in der Vertikalebene der Abtriebswelle oberhalb dieser liegt, während der andere weitere Querlenker als Spurlenker fungiert, und wobei die beiden aufbauseitigen Lager des verwindungssteif ausgebildeten Querlenkers derart ausgebildet sind, dass dieser Querlenker durch radseitig eingeleitete Längskräfte eine translatorische Verlagerung im wesentlichen in Richtung der Verbindungslinie dieser aufbauseitigen Lager erfährt.
Zum Stand der Technik wird neben der EP-0 288 654 B1 insbesondere auf die US 6,755,429 B1 verwiesen. Eine alternative Radaufhängung für die über eine Abtriebswelle angetriebenen Hinterräder eines Kraftfahrzeugs, ist ferner aus dem Audi D2 bzw. dem Audi D2/4D bekannt ist.

Kinematisch hat sich die aus der erstgenannten EP 0 288 654 B1 bekannte Radaufhängung bestens bewährt. Eine Verbesserung dieser bewährten Radaufhängung hinsichtlich des Bauraum-Bedarfs zeigt die zweitgenannte US 6,755,429 B1. Bezüglich letzterer ist nun wieder eine Verbesserung hinsichtlich der Elasto-Kinematik möglich, was sich die vorliegende Erfindung zur Aufgabe gestellt hat.

Die Lösung dieser Aufgabe ist für eine Radaufhängung nach dem Oberbegriff des Anspruchs 1 dadurch gekennzeichnet, dass der hinter der Abtriebswelle liegende Spurlenker in vertikalem Abstand oberhalb des verwindungssteifen Querlenkers am Radträger angelenkt ist.

Eine durch radseitig eingeleitete Längskräfte hervorgerufene translatorische Verlagerung oder Längsverschiebung ist unter elastokinematischen Gesichtspunkten günstiger als irgendwelche Drehbewegungen, insbesondere in Zusammenwirken mit dem sog. Spurlenker, über den die Spureinstellung am Hinterrad erfolgt. Die notwendigen Längsanschläge zur Begrenzung der Axialwege der aufbauseitigen Gummi-Lager bei hohen Kräften sind dabei vorzugsweise derart ausgeführt, dass sie das elastokinematische Verhalten der Achse bei den fahrdynamisch relevanten Fahrzuständen nicht nennenswert verändern. Dabei hat es sich grundsätzlich als günstig erwiesen, wenn der Spurlenker wie im Anspruch 1 angegeben angeordnet ist.

Im übrigen stellt die im Anspruch 1 beschriebene Anordnung der sog. weiteren Querlenker, die neben dem bzw. räumlich oberhalb des funktional äußerst vorteilhaften sog. verwindungssteifen Querlenker(s), der auch als Trapezlenker bezeichnet werden kann, vorgesehen sind, quasi Freiraum zur Verfügung, der nunmehr für andere Elemente der Radaufhängung oder bereits für Bestandteile des Fzg.-Aufbaus genutzt werden kann. So kann ein Karosserie-Längsträger, der hinsichtlich seines Verlaufs oder seiner Gestaltung im wesentlich nur an einen Querlenker, nämlich an den im wesentlichen direkt oberhalb der Abtriebswelle verlaufenden Querlenker angepasst sein muss, günstiger gestaltet werden und ermöglicht somit einen günstigeren Kräfteverlauf. Insbesondere jedoch kann hiermit eine Tragfeder für den Aufbau platzsparend untergebracht werden, und zwar auch dann, wenn sich diese direkt am Radträger abstützt. Besonders vorteilhaft ist es dabei, wenn diese Tragfeder vor oder hinter der Antriebswelle nicht oberhalb dieser am Radträger abgestützt ist, wobei - ebenfalls im Hinblick auf einen minimierten Bauraumbedarf - eine Luftfeder als Tragfeder besonders vorteilhaft ist. Es kann jedoch auch eine Luftfeder-Stahlfeder-Kombination vorgesehen sein.

Hiermit ist zum einen im Fzg.-Aufbau ein besonders breiter, flächiger Kofferraumboden erzielbar. Weiterhin können hierdurch die bei anderen Achskonzepten vorhandenen Nachteile, die hinsichtlich einer erforderlichen akustischer Isolierung aufgrund einer Vertikalbelastung der Lager des Hinterachsträgers durch eine ungünstige Übersetzung der Tragfeder auf einem der unteren Lenker bestehen, vermieden werden. Somit wird ein Zielkonflikt zwischen akustisch optimal isolierender und bauraumgünstiger Feder-Dämpfer-Anordnung bzw. Federbein-Anordnung aufgelöst. Sollte dabei ein der Tragfeder parallel geschalteter Dämpfer ein Hindernis insbesondere in Vertikalrichtung betrachtet darstellen, so ist es auch möglich, den Dämpfer von der Tragfeder getrennt auf der der Tragfeder gegenüberliegenden Seite der Antriebswelle am Radträger oder am verwindungssteifen Querlenker abzustützen. Die Möglichkeit, ein Federbein bei identischer Kinematik wahlweise auf dem Radträger oder auf dem oberen Querlenker abzustützen, ermöglicht weiterhin eine Stahlfeder- oder Luftfeder-spezifische Übersetzung, die damit auf die jeweiligen Bedürfnisse optimal abgestimmt werden kann. Zusammenfassend bietet sich damit die Möglichkeit, die unterschiedlichen Anforderungen bezüglich Fahrdynamik, akustischer Isolierung, Package, Ansprechverhalten einer Luftfeder und einer Stahlfeder mit einem einzigen Achskonzept zu erfüllen.

Vorzugsweise ist der sog. Spurlenker nennenswert länger als der im wesentlichen direkt oberhalb der Abtriebswelle liegende Querlenker, so dass eine relativ hohe Unempfindlichkeit gegenüber Toleranzen vorliegt. Die erfindungsgemäße Anordnung dieses Spurlenkers hinter der Abtriebswelle (bei Betrachtung in Fahrzeug-Fahrtrichtung) erlaubt eine zumindest geringfügige Lenkbarkeit des jeweiligen Hinterrads aufgrund einer dann günstigen Anordnungsmöglichkeit für einen zugehörigen, den Spurlenker betätigenden Lenkaktuator.

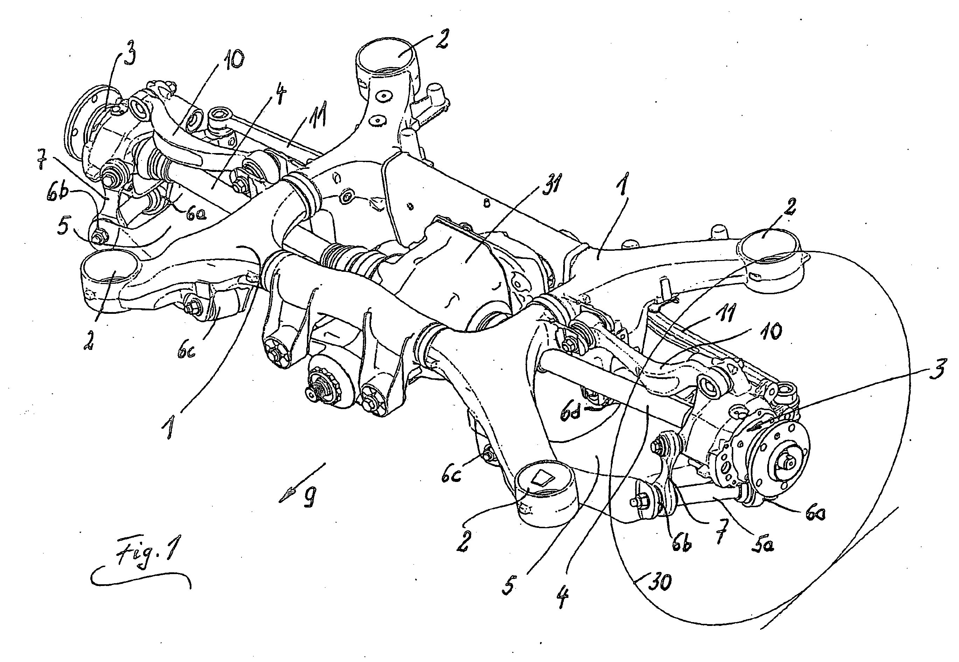

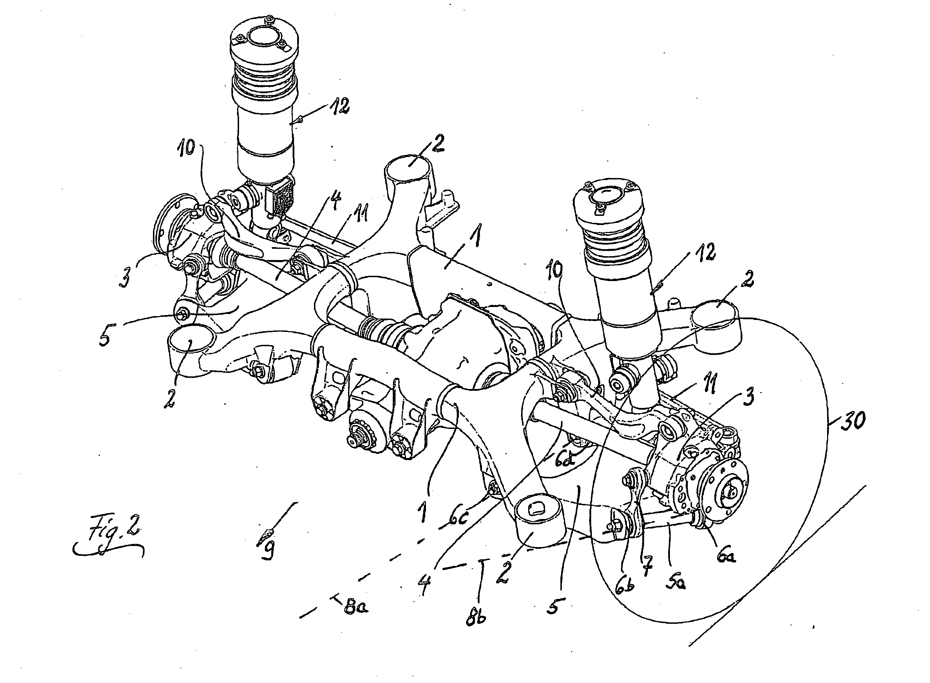

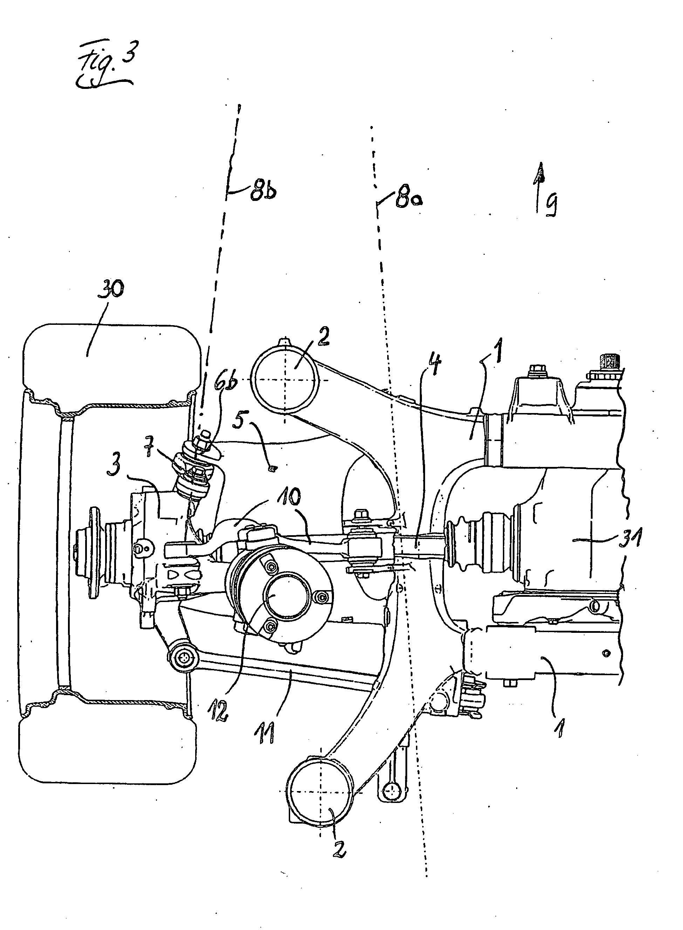

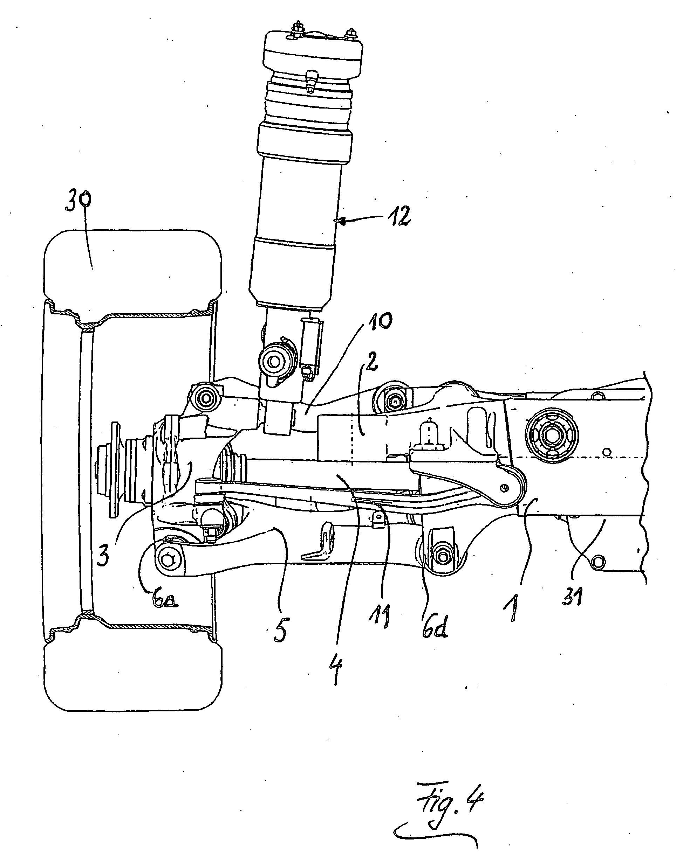

Im folgenden wird die Erfindung anhand eines bevorzugten Ausführungsbeispieles weiter erläutert, wobei die beigefügte **Figur 1** eine räumliche Ansicht einer erfindungsgemäßen Radaufhängung ohne Tragfeder und **Figur 2** eine vergleichbare Ansicht mit einer (möglichen) Tragfeder-Dämpfer-Anordnung zeigt. In **Fig.3** ist der radnahe Bereich gemäß Figur 2 in Aufsicht von oben und in **Fig.4** in Ansicht von hinten (d.h. die Fzg.-Fahrrichtung verläuft in Blickrichtung senkrecht zur Zeichenebene) jeweils nur für die linke Hälfte dargestellt. Erfindungswesentlich können dabei sämtliche näher beschriebenen Merkmale sein.

Mit der Bezugsziffer 1 ist ein sog. Fahrschemel bezeichnet, der wie üblich rahmenartig ausgebildet ist und über vier Lagerstellen 2 am Unterboden des nicht dargestellten Fzg.-Aufbaus befestigt ist. An diesem Fahrschemel 1 ist rechtsseitig sowie linksseitig jeweils über mehrere Lenker ein Radträger 3 angelenkt, an dem ein in den Figuren 1, 2 nur für die linke Seite und nur Form eines Kreises dargestelltes Fahrzeug-Hinterrad 30 befestigt ist. Jedes Hinterrad 30 wird von einer Abtriebswelle 4 angetrieben, die mit einem im Zentrum des Fahrschemels 1 vorgesehenen Hinterachsgetriebe 31 (mit Differential) verbunden ist.

Bei den den Radträger 3 führenden Lenkern handelt es sich erstens um einen im wesentlichen verwindungssteifen und flächigen unteren Querlenker 5, der seiner Form wegen auch als Trapezlenker 5 oder seiner Funktion wegen auch als Schwinge 5 bezeichnet werden kann, denn dieser Querlenker 5 bzw. diese Schwinge 5 ist über ein erstes am besten in Fig.4 sichtbares Lager 6a direkt und über ein zweites Lager 6b unter Zwischenschaltung eines im wesentlichen senkrecht zur Ebene dieses Querlenkers 5 angeordneten sog. Integrallenkers 7 indirekt mit dem Radträger 3 verbunden und ebenso an ihrem anderen Ende über zwei Lager 6c, 6d am Fahrschemel 1 angelenkt. Dabei sind die Lager 6a - 6d dieses im wesentlichen verwindungssteifen Trapezlenkers 5 derart angeordnet, dass sich dessen aufbauseitige Drehachse 8a, die durch die Lager 6c, 6d bestimmt und in den Figuren 2, 3 angedeutet dargestellt ist, mit der Verbindungslinie 8b (ebenfalls in den Fig.2, 3 angedeutet) der radseitigen Lager 6a, 6b dieses Querlenkers 5 zumindest annähernd und in Draufsicht vor (d.h. in Fahrzeug-Fahrtrichtung 9 betrachtet vor) dem Rad 30 schneiden. Dabei können - wie hier realisiert - die genannte Drehachse 8a und die Verbindungslinie 8b geringfügig windschief zueinander im Raume liegen, d.h. sie müssen nicht exakt in einer gemeinsamen Ebene liegen, können dies jedoch durchaus tun. Im Hinblick auf eine günstige Radführungskinematik sollten die Drehachse 8a und die Verbindungslinie 8b in Draufsicht in ihrem "virtuellen" Schnittpunkt in Vertikalrichtung jedoch nicht weit voneinander beabstandet sein.

Neben dieser Schwinge 5 oder diesem Trapezlenker 5 wird jeder Radträger 3 durch zwei weitere Lenker geführt, nämlich durch einen oberen Querlenker 10 und durch einen sog. Spurlenker 11. Während letztgenannter hier relativ zur Fahrtrichtung 9 hinter der jeweiligen Abtriebswelle 4 liegt, ist der obere Querlenker 10 zumindest annähernd in der Vertikalebene oberhalb der Abtriebswelle 4 liegend angeordnet, wie insbesondere aus Fig.3 hervorgeht. Hierdurch wird, wie vor Figuren-Beschreibung erläutert ist, u.a. vorteilhafterweise Bauraum für den Fzg.-Aufbau gewonnen. Aus den gleichen Gründen ist eine hier als Feder-Dämpferbein ausgebildete Tragfeder 12 (mit integriertem Dämpfer) zwischen dem Radträger 3 und dem (nicht dargestellten Fzg.-Aufbau) knapp hinter der Abtriebswelle 4 stehend angeordnet, vgl. Fig. 2,3.

Der obere Querlenker 10 verläuft mit Ausnahme einer Ausbuchtung für den Freigang der Tragfeder 12 in Draufsicht (Fig.3) im wesentlichen in Fzg.-Querrichtung, d.h. im wesentlichen orthogonal zur Fahrzeug-Fahrtrichtung 9 sowie im wesentlichen parallel zur Abtriebswelle 4. Zurückkommend auf die Schwinge 5 ist diese radseitig nicht einstückig ausgebildet, sondern es wird das zweite Lager 6b dieser Schwinge 5 wie ersichtlich durch einen sog. Verbindungsarm 5a zwischen dem Lager 6a und dem Lager 6b gebildet, auf dem der genannte Integrallenker 7 angeordnet ist, jedoch kann dies sowie eine Vielzahl weiterer Details insbesondere konstruktiver Art durchaus abweichend von obigen Erläuterungen gestaltet sein, ohne den Inhalt der Patentansprüche zu verlassen.

## Patentansprüche

1. Radaufhängung für die über eine Abtriebswelle (4) angetriebenen Hinterräder (30) eines Kraftfahrzeugs mit einem das Rad (30) lagernden Radträger (3), an dem ein verwindungssteif ausgebildeter Querlenker (5) über ein erstes Lager (6a) direkt und über ein zweites Lager (6b) unter Zwischenschaltung eines im wesentlichen senkrecht zur Ebene dieses Querlenkers (5) angeordneten sog. Integrallenkers (7) indirekt mit dem Radträger (3) verbunden ist und zwei weitere Querlenker angelenkt (10, 11) sind, wobei alle Querlenker (5, 10, 11) mit ihrem dem Radträger (3) abgewandten Ende direkt oder indirekt letztlich am Fahrzeug-Aufbau abgestützt sind und wobei sich die aufbauseitige Drehachse (8a) des verwindungssteifen Querlenkers (5) mit der Verbindungslinie (8b) der radseitigen Lager (6a, 6b) dieses Querlenkers (5) zumindest annähernd und in Draufsicht vor dem Rad (30) schneiden und wobei einer der weiteren Querlenker (10) oberhalb des verwindungssteifen Querlenkers (5) sowie zumindest annähernd in der Vertikalebene der Abtriebswelle (4) oberhalb dieser liegt, während der andere weitere Querlenker (11) als Spurlenker (11) fungiert,
und wobei die beiden aufbauseitigen Lager (6c, 6d) des verwindungssteif ausgebildeten Querlenkers (5) derart ausgebildet sind, dass dieser Querlenker (5) durch radseitig eingeleitete Längskräfte eine translatorische Verlagerung im wesentlichen in Richtung der Verbindungslinie (8a) dieser aufbauseitigen Lager (6c, 6d) erfährt,
**dadurch gekennzeichnet, dass** der hinter der Abtriebswelle (4) liegende Spurlenker (11) in vertikalem Abstand oberhalb des verwindungssteifen Querlenkers (5) am Radträger (3) angelenkt ist.

2. Radaufhängung nach Anspruch 1,
**dadurch gekennzeichnet, dass** der Spurlenker (11) nennenswert länger als der im wesentlichen direkt oberhalb der Abtriebswelle (4) liegende Querlenker (10) ist.

3. Radaufhängung nach Anspruch 1 oder 2,
**dadurch gekennzeichnet, dass** eine Tragfeder (12) für den Fahrzeug-Aufbau vor oder hinter der Antriebswelle (4) nicht oberhalb dieser am Radträger (3) abgestützt ist.

4. Radaufhängung nach Anspruch 3,
**dadurch gekennzeichnet, dass** die Tragfeder (12) als Luftfeder oder als Stahlfeder als eine Stahlfeder-Luftfeder-Kombination ausgebildet ist.

5. Radaufhängung nach einem der vorangegangenen Ansprüche,
**dadurch gekennzeichnet, dass** ein der Tragfeder (12) parallel geschalteter Dämpfer von dieser getrennt auf der der Tragfeder (12) gegenüberliegenden Seite der Antriebswelle entweder am Radträger (3) oder am verwindungssteifen Querlenker (5) oder am sog. Integrallenker (7) abgestützt ist.

6. Radaufhängung nach Anspruch 1 oder 2,
**dadurch gekennzeichnet, dass** ein Luftfederbein oder Stahlfederbein als Tragfeder (12) am Radträger (3) oder am oberen Querlenker (10) angebunden ist.

7. Radaufhängung nach einem der vorangegangenen Ansprüche,
**dadurch gekennzeichnet, dass** der oberhalb der Abtriebswelle (4) liegende Querlenker (10) in Draufsicht im wesentlichen in Fahrzeug-Querrichtung verläuft.

## Claims

1. A wheel suspension for the rear wheels (30) of a motor vehicle, which are driven by an output shaft (4), with a hub carrier (3) which mounts the wheel (30) and on which a torsionally rigid transverse link (5) is connected directly to the hub carrier (3) by means of a first bearing (6a) and indirectly by means of a second bearing (6b) with the interconnection of a so-called integral link (7) arranged substantially vertically to the plane of this transverse link (5), and two further transverse links (10, 11) are coupled, wherein all the transverse links (5, 10, 11) are ultimately supported directly or indirectly on the vehicle bodywork by their end remote from the hub carrier (3) and wherein the bodywork-side rotational axis (8a) of the torsionally rigid transverse link (5), at least approximately and in a plan view in front of the wheel (3), intersects the connecting line (8b) of the wheel-side bearing (6a, 6b) of this transverse link (5) and wherein one of the further transverse links (10) is located above the torsionally rigid transverse link (5) and at least approximately in the vertical plane of the output shaft (4) thereabove, while the other further transverse link (11) acts as a track link (11), and wherein the two bodywork-side bearings (6c, 6d) of the torsionally rigid transverse link (5) are configured such that this transverse link (5) undergoes a translatory displacement substantially in the direction of the connecting line (8a) of these bodywork-side bearings (6c, 6d) due to longitudinal forces introduced on the wheel side,
**characterised in that** the track link (11) located behind the output shaft (4) is coupled on the hub carrier (3) in a vertical spacing above the torsionally rigid transverse link (5).

2. A wheel suspension according to claim 1, **characterised in that** the track link (11) is appreciably longer than the transverse link (10) located substantially directly above the output shaft (4).

3. A wheel suspension according to claim 1 or claim 2, **characterised in that** a bearing spring (12) for the vehicle bodywork is supported on the hub carrier (3) in front of or behind the output shaft (4) not thereabove.

4. A wheel suspension according to claim 3, **characterised in that** the bearing spring (12) is configured as a pneumatic spring or as a steel spring or as a steel spring-pneumatic spring combination.

5. A wheel suspension according to any one of the preceding claims, **characterised in that** a damper, connected in parallel with the bearing spring (12) is supported, separately therefrom, either on the hub carrier (3) or on the torsionally rigid transverse link (5) or on the so-called integral link (7), on the side of the output shaft opposite the bearing spring (12).

6. A wheel suspension according to claim 1 or claim 2, **characterised in that** a pneumatic spring leg or a steel spring leg is connected as a bearing spring (12) on the hub carrier (3) or on the upper transverse link (10).

7. A wheel suspension according to any one of the preceding claims, **characterised in that** the transverse link (10) located above the output shaft (4) in a plan view extends substantially in the transverse direction of the vehicle.

## Revendications

1. Suspension des roues arrière (30) d'un véhicule automobile, entraînées par l'intermédiaire d'un arbre de transmission (4), comportant un support de roue (3) portant la roue (30) et auquel est reliée directement une barre transversale (5), rigide en torsion, par un premier palier (6a) et indirectement au support de roue (3) par un second palier (6b) avec interposition d'un bras intégral (7) pratiquement perpendiculaire au plan de la barre transversale (5), et auquel sont articulées deux autres barres transversales (10, 11),
toutes les barres transversales (5, 10, 11) s'appuient directement ou indirectement, finalement sur la caisse du véhicule par leur extrémité non tournée vers le support de roue (3),
les axes de rotation (8a), côté caisse, de la barre transversale (5) rigide en torsion, coupent la ligne de liaison (8b) passant par les paliers (6a, 6b) côté roue de cette barre transversale (5), au moins sensiblement en avant de la roue (30) en vue de dessus,
l'une des autres barres transversales (10) est placée au-dessus de la barre transversale (5) rigide en torsion ainsi qu'au moins sensiblement dans le plan vertical de l'arbre d'entraînement (4) au-dessus de celui-ci, alors que l'autre barre transversale (11) fonctionne comme barre d'accouplement (11), et
les deux paliers (6a, 6b) côté caisse de la barre transversale (5) rigide en torsion, sont réalisés de façon que cette barre transversale (5) subisse, sous l'effet des efforts longitudinaux induits du côté des roues, un déplacement en translation pratiquement dans la direction de la ligne de jonction (8a) passant par ces deux paliers (6a, 6b) côté caisse,
**caractérisée en ce que**
la barre d'accouplement (11) située derrière l'arbre d'entraînement (4) est articulée au support de roue (3), verticalement au-dessus de la barre transversale (5) rigide en torsion.

2. Suspension de roue selon la revendication 1,
**caractérisée en ce que**
la barre d'accouplement (11) est significativement plus longue que la barre transversale (10) située pratiquement directement au-dessus de l'arbre d'entraînement (4).

3. Suspension de roue selon la revendication 1 ou la revendication 2,
**caractérisée en ce qu'**
un ressort de support (12) de la caisse du véhicule s'appuie sur le support de roue (3) devant ou derrière l'arbre d'entraînement (4) mais pas au-dessus de celui-ci.

4. Suspension de roue selon la revendication 3,
**caractérisée en ce que**
le ressort de support (12) est un ressort pneumatique ou un ressort en acier ou une combinaison ressort en acier/ressort pneumatique.

5. Suspension de roue selon l'une des revendications précédentes,
**caractérisée en ce qu'**
un amortisseur, en parallèle au ressort de support, s'appuie séparément de celui-ci, du côté opposé à celui du ressort de support de l'arbre d'entraînement soit sur le support de roue (3) soit sur la barre transversale (5) rigide en torsion ou encore sur la barre intégrale (7).

6. Suspension de roue selon la revendication 1 ou la revendication 2,
**caractérisée en ce qu'**
une jambe à ressort pneumatique ou une jambe à ressort en acier est fixée comme ressort de support (12) au support de roue (3) ou à la barre transversale supérieure (10).

7. Suspension de roue selon l'une des revendications précédentes,
**caractérisée en ce que**
la barre transversale (10) située au-dessus de l'arbre d'entraînement (4) passe, en vue de dessus, pratiquement dans la direction transversale du véhicule.
